# EUROPEAN PATENT APPLICATION

(11) **EP 4 751 544 A1**
(43) Date of publication of application: **03.06.2026**
(21) Application number: 25218372.8
(22) Date of filing: 25.11.2025
(51) Int. Cl.: A01D 34/00, A01D 34/81, B60L 53/16

(54) **A SMART LAWN MOWER AND A DOCKING CHARGING SYSTEM**

(30) Priority: 27.11.2024 CN 202422897780 U
(71) Applicant: SHANGHAI ZHONGJIAN GAOKE ROBOT CO., LTD., Shanghai 200245 (CN)
(72) Inventor: Heng, Li, SHANGHAI, 200245 (CN)
(74) Representative: HGF

(57) **Abstract**

The present application relates to the field of lawn mowing equipment, providing a smart lawn mower and a docking charging system. The smart lawn mower comprises: a housing and a power supply module. The housing is provided with a charging slot recessed into the interior of the housing, the power supply module has a charging terminal for transmitting energy, the charging terminal is provided in the charging slot and a rotatable shield is provided at the opening of the charging slot. When not charging (including when mowing), the shield covers the charging slot, preventing rainwater, grass clippings and other debris from entering the charging slot and avoiding poor contact at the charging terminal. The present application further provides a docking charging system comprising the aforementioned smart lawn mower.

## Description

### Technical field

The present application relates to the field of lawn mowing equipment, and in particular to a smart lawn mower and a docking charging system.

### Background technology

With the continuous advancement of computer technology and artificial intelligence technology, smart lawn mowers have been developed and put on the market. This smart lawn mower integrates environmental sensors, a self-driving system, a cutting system, a battery and a charging system. It can mow lawns automatically without manual operation and automatically return to the charging station when the battery is low, dock and recharge and then continue mowing. Because this type of automated system requires no further management after being set up once, it frees users from the tedious and time-consuming task of lawn maintenance and has therefore been widely adopted.

Existing smart lawn mowers usually have a charging slot at the front, with the charging terminal disposed in the charging slot. During charging, the charging terminal abuts against the power terminal of the charging station, making the docking method simple. However, the charging terminal in the charging slot is easily wetted by rainwater or other liquids, which can cause corrosion, resulting in poor contact of the charging terminal and even short circuits and burnout. In addition, when mowing, grass clippings, dust and other debris can easily get into the charging slot, which is difficult to clean, affecting the charging function.

### Summary of Invention

In order to solve the above problems, the present application provides a smart lawn mower and a docking charging system, which is cleverly designed and simple in structure. The charging terminal in the present application is not easily wetted by rainwater or covered by debris such as grass clippings. The technical solution adopted in the present application is as follows:
A smart lawn mower, comprising:
a housing; a number of wheels disposed at the bottom of the housing; a cutting blade for performing cutting operations; a cutting motor for driving the cutting blade; a power supply module disposed within the housing for powering the cutting motor; the housing is provided with a charging slot recessed into the interior of the housing, the power supply module has a charging terminal for transmitting energy, the charging terminal is provided in the charging slot, the smart lawn mower further comprises a shield blocking the charging slot and the shield is rotatably connected to the charging slot; when the charging terminal is in the initial state of not being connected to an external power terminal, the shield covers the opening of the charging slot. When the charging terminal is in the docking state of being connected to an external power terminal, the shield and the charging terminal abut against two opposite sides of the external power terminal. The side of the shield that abuts against the external power terminal is a smooth curved surface.

By setting a shield to cover the charging slot, rainwater, grass clippings, dust and other debris can be prevented from entering the charging slot, thus avoiding blockage of the charging slot, poor contact of the charging terminal or even short circuits. In addition, in the docking state, the shield and the charging terminal abut against two opposite sides of the external power terminal, so that the power terminal is clamped by the shield and the charging terminal, increasing the abutment force between the power terminal and the charging terminal, reducing the conduction resistance and ensuring the reliability of the contact between the power terminal and the charging terminal. In addition, the side of the shield that abuts against the external power terminal is a smooth curved surface, so that the charging tongue can be moved in and out of the charging slot more smoothly, avoiding jamming between the shield and the charging tongue and making the pressure of the shield against the charging tongue more uniform, which ensures good contact between the power terminal and charging terminal. What is easily overlooked is that when the charging tongue is rotatable and self-resetting, the angle of the charging tongue (relative to the main body in the base) changes when there is a height difference between the charging tongue and the charging slot. Compared to the normal charging state, the contact point between the shield and the charging tongue changes, but it is still within the smooth curved surface area. The smooth curved surface design provides a relatively stable distance from the contact point to the charging terminal, which in turn ensures a stable clamping force between the shield and the charging terminal, increasing contact reliability.

In some embodiments, the shield is rotatably connected to the charging slot via a first elastic member; in the initial state, under the action of the first elastic member, the free end of the shield abuts against the opening of the charging slot from the inside; in the docking state, under the action of the first elastic member, a side of the shield with a smooth curved surface abuts against the external power terminal.

By setting the first elastic member, the self-resetting function of the shield is ensured, so that the shield is always subject to the force of the first elastic member to restore deformation when rotating. In the initial state, the shield will not be accidentally opened, and in the docking state, due to the presence of the force of the first elastic member to restore deformation, the abutment force of the shield against the charging tongue can be increased, thereby ensuring that the power terminal on the charging tongue is in good contact with the charging terminal. It should be noted that the elastic force of the first elastic member is pre-set to be very small to avoid excessive resistance when the charging tongue enters the charging slot. In addition, after the charging tongue pushes against the shield and rotates the shield to its extreme position, the back of the shield (the side away from the charging terminal) abuts against the inner wall of the charging slot, further increasing the clamping of the charging tongue by the shield and the charging terminal.

In some embodiments, the first elastic member is a first torsion spring, the shield is provided with a first pivot portion, the first torsion spring is sleeved on the first pivot portion, one leg of the first torsion spring abuts against the shield and the other leg of the first torsion spring abuts against the inner wall of the charging slot.

In some embodiments, the charging slot extends longitudinally into the interior of the housing, the charging terminal is located on a lower wall surface in the charging slot and during the rotation of the shield from the initial state to the docking state, a free end of the shield gradually approaches an upper wall surface in the charging slot.

By disposing the charging terminal on the lower wall surface in the charging slot, as the shield rotates from the initial state to the docking state, the free end of the baffle plate gradually approaches the upper wall in the charging slot. In other words, as the shield rotates from the initial state to the docking state, it gradually rotates upward. Thus, even without the first elastic member, the shield will block the charging slot under the action of gravity in the initial state.

In another aspect, the present application further provides a docking charging system comprising a charging station and the aforementioned smart lawn mower, the charging station comprising: a base; and a power terminal disposed in the base. When the charging station transfers energy to the smart lawn mower, the power terminal extends into the charging slot of the smart lawn mower and connects with the charging terminal.

In some embodiments, the base comprises a main body and a charging tongue connected to the main body, the power terminal is disposed at the end of the charging tongue and when the charging station transmits energy to the smart lawn mower, the charging tongue extends into the charging slot of the smart lawn mower.

In some embodiments, the charging tongue may be rotatably connected to the main body in a self-resetting manner.

The charging tongue may rotatably connect to the main body in a self-resetting manner, so that when there is a height difference between the charging tongue and the charging slot in the initial position, the charging tongue can adaptively rotate downward or upward by abutting against the shield or by abutting against an edge of the opening of the charging slot and then enter the charging slot. The charging tongue can be rotatably connected to the main body in a self-resetting manner, improving the adaptability of the charging tongue to the height difference between the charging tongue and the charging slot. It can also increase the abutment force of the power terminal against the charging terminal, thereby ensuring good contact between the power terminal and the charging terminal.

In some embodiments, the charging tongue is provided with a second pivot portion, the charging tongue is rotatably connected to the main body through the second pivot portion, the second pivot portion is provided with a card slot, the second pivot portion is sleeved with a second torsion spring, one leg of the second torsion spring is engaged in the card slot and the other leg of the second torsion spring abuts against the main body.

In some embodiments, the power terminal and the charging terminal are elastically connected when in the docking state.

The elastic connection between the power terminal and the charging terminal reduces the requirement for positional accuracy between the power terminal and the charging terminal, reduces the difficulty of docking between the power terminal and the charging terminal and ensures sufficient abutment force between the power terminal and the charging terminal, thereby ensuring good contact between the power terminal and the charging terminal.

In some embodiments, the charging station further comprises a base plate, the base is located on the base plate and when the charging station transmits energy to the smart lawn mower, the smart lawn mower is located entirely on the base plate.

The smart lawn mower and docking charging system provided in the present application have at least one of the following beneficial effects:
1. In the smart lawn mower provided in the present application, by setting a shield to cover the charging slot, rainwater, grass clippings, dust and other debris can be prevented from entering the charging slot, thus avoiding blockage of the charging slot, poor contact of the charging terminal or even short circuits. In addition, in the docking state, the shield and the charging terminal abut against two opposite sides of the external power terminal, so that the power terminal is clamped by the shield and the charging terminal, increasing the abutment force between the power terminal and the charging terminal, reducing the conduction resistance and ensuring the reliability of the contact between the power terminal and the charging terminal. In addition, the side of the shield that abuts against the external power terminal is a smooth curved surface, so that the charging tongue can be moved in and out of the charging slot more smoothly, avoiding jamming between the shield and the charging tongue and making the pressure of the shield against the charging tongue more uniform, which ensures good contact between the power terminal and charging terminal. What is easily overlooked is that when the charging tongue is rotatable and self-resetting, the angle of the charging tongue (relative to the main body in the base) changes when there is a height difference between the charging tongue and the charging slot. Compared to the normal charging state, the contact point between the shield and the charging tongue changes, but it is still within the smooth curved surface area. The smooth curved surface design provides a relatively stable distance from the contact point to the charging terminal, which in turn ensures a stable clamping force between the shield and the charging terminal, increasing contact reliability.
2. In the smart lawn mower provided in the present application, by setting the first elastic member, the self-resetting function of the shield is ensured, so that the shield is always subject to the force of the first elastic member to restore deformation when rotating. In the initial state, the shield will not be accidentally opened, and in the docking state, due to the presence of the force of the first elastic member to restore deformation, the abutment force of the shield against the charging tongue can be increased, thereby ensuring that the power terminal on the charging tongue is in good contact with the charging terminal. It should be noted that the elastic force of the first elastic member is pre-set to be very small to avoid excessive resistance when the charging tongue enters the charging slot. In addition, after the charging tongue pushes against the shield and rotates the shield to its extreme position, the back of the shield (the side away from the charging terminal) abuts against the inner wall of the charging slot, further increasing the clamping of the charging tongue by the shield and the charging terminal.
3. In the smart lawn mower provided in the present application, by disposing the charging terminal on the lower wall surface in the charging slot, as the shield rotates from the initial state to the docking state, the free end of the baffle plate gradually approaches the upper wall in the charging slot. In other words, as the shield rotates from the initial state to the docking state, it gradually rotates upward. Thus, even without the first elastic member, the shield will block the charging slot under the action of gravity in the initial state.
4. In the docking charging system provided in the present application, the charging tongue may rotatably connect to the main body in a self-resetting manner, so that when there is a height difference between the charging tongue and the charging slot in the initial position, the charging tongue can adaptively rotate downward or upward by abutting against the shield or by abutting against an edge of the opening of the charging slot and then enter the charging slot. The charging tongue can be rotatably connected to the main body in a self-resetting manner, improving the adaptability of the charging tongue to the height difference between the charging tongue and the charging slot. It can also increase the abutment force of the power terminal against the charging terminal, thereby ensuring good contact between the power terminal and the charging terminal.
5. In the docking charging system provided in the present application, the elastic connection between the power terminal and the charging terminal reduces the requirement for positional accuracy between the power terminal and the charging terminal, reduces the difficulty of docking between the power terminal and the charging terminal and ensures sufficient abutment force between the power terminal and the charging terminal, thereby ensuring good contact between the power terminal and the charging terminal.

### Description of drawings

The above characteristics, technical features and advantages of a smart lawn mower and a docking charging system and their embodiments will be further explained in a clear and easy-to-understand manner with reference to the drawings:
FIG. 1 is the state of the charging tongue in the present application before entering the charging slot;
FIG. 2 is the state of the charging tongue in the present application when not fully inserted into the charging slot;
FIG. 3 is the state of the charging tongue in the present application when fully inserted into the charging slot;
FIG. 4 is the state in which the charging tongue is fully inserted the charging slot after the height of the charging slot is lowered;
FIG. 5 is the state in which the charging tongue is fully inserted the charging slot after the height of the charging slot is increased;
FIG. 6 is an embodiment of a charging station;
FIG. 7 is an exploded view of the charging slot area;
FIG. 8 is an exploded view of the rotating part of the charging tongue.

Explanation of numbers in the figures:
charging slot 1, charging terminal 2, shield 3, smooth curved surface 4, first torsion spring 5, first pivot portion 6, charging tongue 7, power terminal 8, main body 9, second pivot portion 10, card slot 11, base plate 12, rotating shaft mounting slot 13, upper cover 14, lower shell 15, U-shaped card slot 16, snap cover 17, rotating shaft portion 18, housing 19, second torsion spring 20.

### Detailed implementation

In order to more clearly explain the technical solution in the embodiments of the present application or the prior art, the specific embodiments of the present application will be described below with reference to the drawings. Obviously, the drawings in the following description are only some embodiments of the present application. Those of ordinary skill in the art may obtain other drawings and other embodiments based on these drawings without creative labour.

To keep the drawings simple, each drawing only schematically shows the parts relevant to the present application, and they do not represent the actual structure of the product. In addition, in order to make the drawings concise and easy to understand, in some drawings, only one of the components with the same structure or function is schematically depicted or only one of them is labelled. Herein, "a" means not only "only one", but also "more than one".

It should also be further understood that the term "and/or" as used in this specification and the appended claims refers to any combination of one or more of the associated listed items as well as all possible combinations and includes such combinations.

Herein, it should be noted that, unless otherwise expressly specified and defined, the terms "mounted", "linked" and "connected" shall be broadly interpreted. For example, they may be fixed connections, detachable connections or integral connections; they may be mechanical connections or electrical connections; they may be direct connections or indirect connections through an intermediate medium; and they may be the internal connection between two components. For those of ordinary skill in the art, the specific meanings of the above terms in the present application may be understood on a case-by-case basis.

In addition, in the description of the present application, the terms "first", "second" etc. are used only to distinguish descriptions and should not be construed as indicating or implying relative importance.

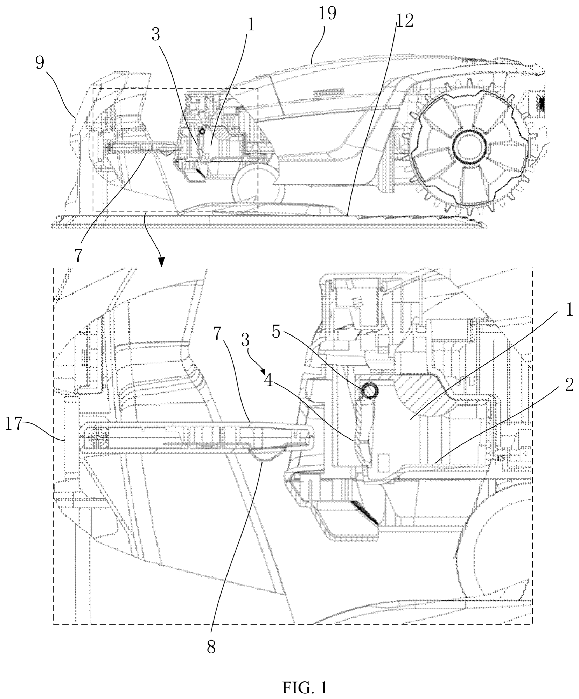

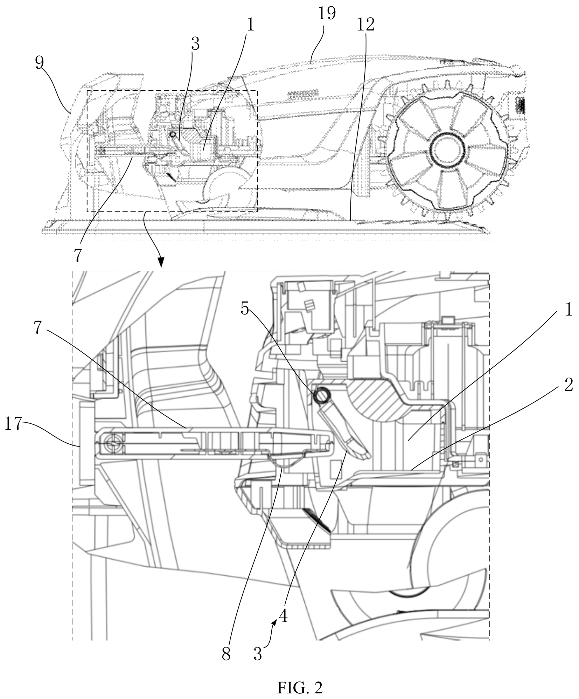

Referring to FIGS. 1-8, a docking charging system comprises a smart lawn mower and a charging station. The smart lawn mower performs mowing operations and the charging station is used to recharge the returning smart lawn mower.

In this embodiment, the smart lawn mower comprises a housing 19 extending longitudinally, a number of wheels disposed at the bottom of the housing 19 and a drive motor disposed within the housing 19. The drive motor drives the wheels to rotate to realise the movement of the smart lawn mower. The housing 19 is further provided with a power supply module, a cutting blade for cutting operations and a cutting motor for driving the cutting blade. The power supply module provides power to the drive motor and the cutting motor.

The power supply module comprises a charging terminal 2. The charging terminal 2 is used to contact and electrically connect with an external power terminal 8 to charge the smart lawn mower. A charging slot 1 recessed into the interior of the housing 19 is provided at the centre of the front end between the top and bottom of the housing 19. The charging slot 1 extends longitudinally into the housing 19 and the charging terminal 2 is disposed inside the charging slot 1.

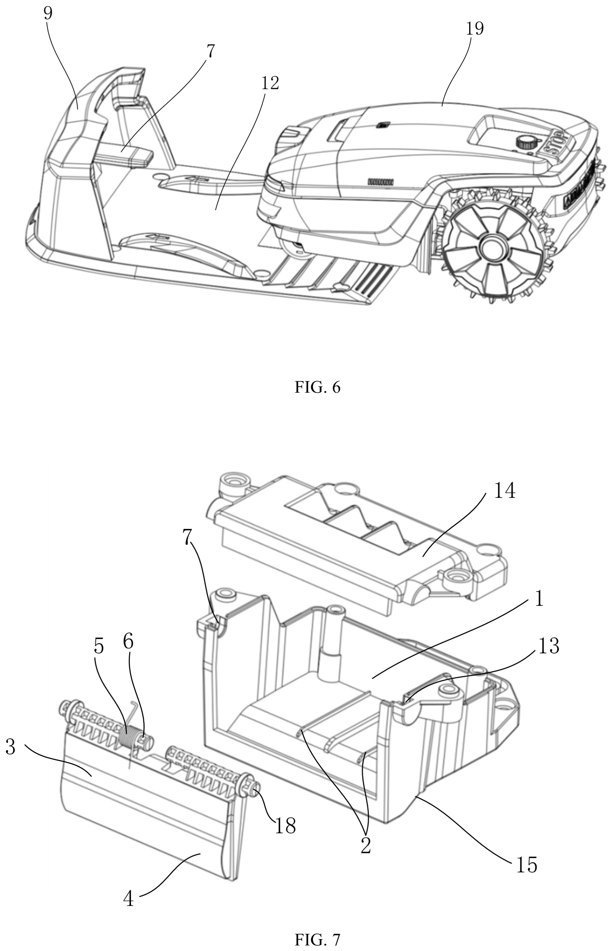

Referring to FIGS. 1-6 and 8, the charging station comprises a base and a base plate 12 disposed below the base. The base comprises a main body 9 and a charging tongue 7 connected to the main body 9. Referring to FIG. 1 and FIG. 6, the charging tongue 7 is roughly horizontal when not docked with the charging slot 1. Its height relative to the base plate 12 is basically the same as the height of the charging slot 1 of the smart lawn mower, meaning that the two are roughly the same height.

Referring to FIGS. 1-5, the end of the charging tongue 7 is provided with a power terminal 8. When the charging station charges the smart lawn mower, the end of the charging tongue 7 extends into the charging slot 1 of the smart lawn mower and the power terminal 8 is electrically connected to the charging terminal 2.

The base is located on the base plate 12, and when the charging station charges the smart lawn mower, the smart lawn mower is located entirely on the base plate 12 to ensure the consistency of the smart lawn mower's height.

Referring to FIGS. 1-5 and 7, the smart lawn mower further comprises a shield 3 that covers the charging slot 1. The shield 3 is rotatably connected to the charging slot 1; when the charging terminal 2 is in the initial state of not being connected to an external power terminal 8, the shield 3 covers the opening of the charging slot 1. When the charging terminal 2 is in the docking state of being connected to the external power terminal 8, the shield 3 and the charging terminal 2 abut against two opposite sides of the external power terminal 8, and the side of the shield 3 that abuts against the external power terminal 8 is a smooth curved surface 4.

It can be understood that by providing a shield 3 and using the shield 3 to cover the charging slot 1, rainwater, grass clippings, dust and other debris can be prevented from entering the charging slot 1, thus avoiding blockage of the charging slot 1, poor contact of the charging terminal 2 or even short circuits. In addition, in the docking state, the shield 3 and the charging terminal 2 abut against two opposite sides of the external power terminal 8, so that the power terminal 8 is clamped by the shield 3 and the charging terminal 2, increasing the abutment force between the power terminal 8 and the charging terminal 2, reducing the conduction resistance and ensuring the reliability of the contact between the power terminal 8 and the charging terminal 2. In addition, the side of the shield 3 that abuts against the external power terminal 8 is a smooth curved surface 4, so that the charging tongue 7 can be moved in and out of the charging slot 1 more smoothly, avoiding jamming between the shield 3 and the charging tongue 7 and making the pressure of the shield 3 against the charging tongue 7 more uniform, which ensures good contact between the power terminal 8 and charging terminal 2. What is easily overlooked is that when the charging tongue 7 is rotatable and self-resetting, the angle of the charging tongue 7 (relative to the main body in the base) changes when there is a height difference between the charging tongue 7 and the charging slot 1. Compared to the normal charging state, the contact point between the shield 3 and the charging tongue 7 changes, but it is still within the smooth curved surface 4 area. The smooth curved surface 4 design provides a relatively stable distance from the contact point to the charging terminal 2, which in turn ensures a stable clamping force between the shield 3 and the charging terminal 2, increasing contact reliability.

Referring to FIGS. 1-5 and 7, in one embodiment, the shield 3 is rotatably connected to the charging slot 1 by a first elastic member; in the initial state, under the action of the first elastic member, the free end of the shield 3 abuts against the opening of the charging slot 1 from the inside; in the docking state, under the action of the first elastic member, a side of the shield 3 with a smooth curved surface 4 abuts against the external power terminal 8.

It is easy to understand that by setting the first elastic member, the self-resetting function of the shield 3 is ensured, so that the shield 3 is always subject to the force of the first elastic member to restore deformation when rotating. In the initial state, the shield 3 will not be accidentally opened, and in the docking state, due to the presence of the force of the first elastic member to restore deformation, the abutment force of the shield 3 against the charging tongue 7 can be increased, thereby ensuring that the power terminal 8 on the charging tongue 7 is in good contact with the charging terminal 2. It should be noted that the elastic force of the first elastic member is pre-set to be very small to avoid excessive resistance when the charging tongue 7 enters the charging slot 1. In addition, after the charging tongue 7 pushes against the shield 3 and rotates the shield 3 to its extreme position, the back of the shield 3 (the side away from the charging terminal) abuts against the inner wall of the charging slot 1, further increasing the clamping of the charging tongue 7 by the shield 3 and the charging terminal 2. The first elastic member may be a spring, a torsion spring etc., as long as the shield 3 can be reset.

Referring to FIG. 7, in one embodiment, the first elastic member is a first torsion spring 5, the shield 3 is provided with a first pivot portion 6, the first torsion spring 5 is sleeved on the first pivot portion 6, one leg of the first torsion spring 5 abuts against the shield 3 and the other leg of the first torsion spring 5 abuts against the inner wall of the charging slot 1.

Specifically, referring to FIG. 7, the upper end of the shield 3 is provided with a rotating shaft portion 18 on both sides, the charging slot 1 is provided with a rotating shaft mounting slot 13 and the rotating shaft portion 18 of the shield 3 is mounted in the rotating shaft mounting slot 13 of the charging slot 1 to realise a rotatable connection between the shield 3 and the charging slot 1. The charging slot 1 comprises an upper cover 14 and a lower shell 15. The upper cover 14 and the lower shell 15 divide the entire rotating shaft mounting slot 13 into two parts, so that the rotating shaft portion 18 is easy to mount into the rotating shaft mounting slot 13. For example, the rotating shaft portion 18 is first mounted into the part of the rotating shaft mounting slot 13 on the lower shell 15, and then the upper cover 14 is mounted onto the lower shell 15, thus completing the rotatable connection between the shield 3 and the charging slot 1.

In one embodiment, the charging terminal 2 is located on a lower wall surface in the charging slot 1, and during the rotation of the shield 3 from the initial state to the docking state, a free end of the shield 3 gradually approaches an upper wall surface in the charging slot 1. That is, the height of the rotating shaft of the shield 3 is higher than the height of the free end of the shield 3 in the initial state. During the insertion of the charging tongue 7 into the charging slot 1, the charging tongue 7 pushes the shield 3 to gradually rotate upward. Thus, even without the first elastic member, the shield 3 will automatically reset and block the charging slot 1 under the action of gravity in the initial state.

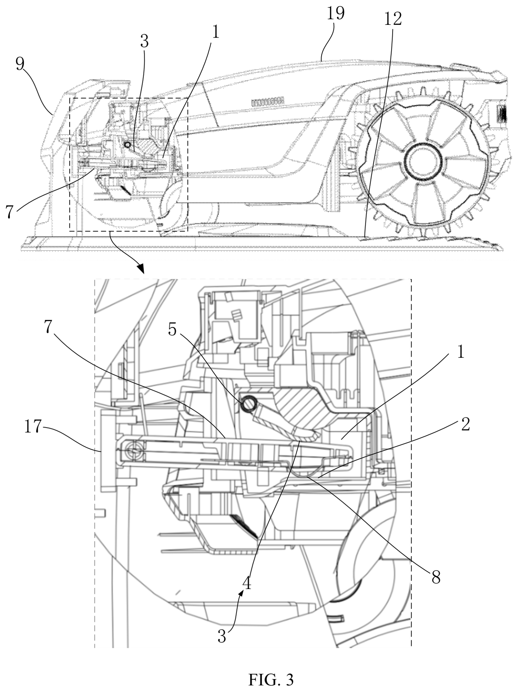

Referring to FIGS. 3-5, in one embodiment, the charging tongue 7 is rotatably connected to the main body 9 in a self-resetting manner. Specifically, the self-resetting function of the charging tongue 7 after rotation can be realised with a spring, torsion spring etc. It is worth noting that the charging tongue 7 may rotatably connect to the main body 9 in a self-resetting manner, so that when there is a height difference between the charging tongue 7 and the charging slot 1 in the initial position, the charging tongue 7 can adaptively rotate downward or upward by abutting against the shield 3 or by abutting against an edge of the opening of the charging slot 1 and then enter the charging slot 1. The charging tongue 7 can be rotatably connected to the main body 9 in a self-resetting manner, improving the adaptability of the charging tongue 7 to the height difference between the charging tongue 7 and the charging slot 1. It can also increase the abutment force of the power terminal 8 against the charging terminal 2, thereby ensuring good contact between the power terminal 8 and the charging terminal 2.

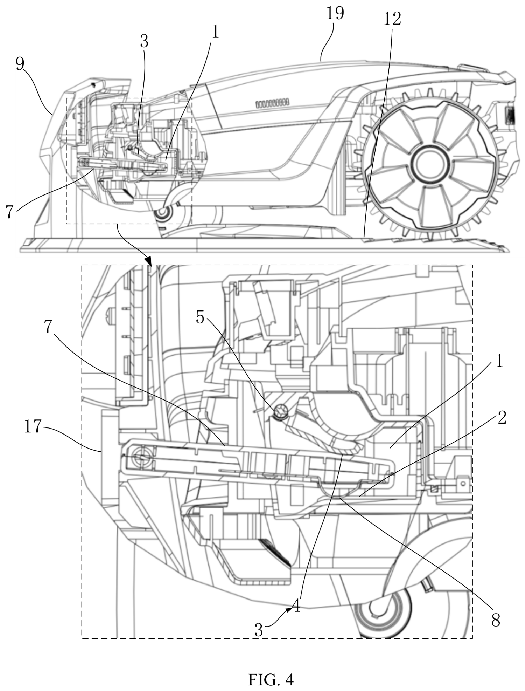

FIGS. 1-3 show the gradual docking of the charging tongue 7 with the charging slot 1. The charging tongue 7 is roughly horizontal when not abutting against the shield 3. After the charging tongue 7 is docked with the charging slot 1, the charging tongue 7 will tilt slightly downward under the downward pressure of the shield 3, thereby increasing the abutment force of the power terminal 8 against the charging terminal 2 and reducing the conduction resistance. As the usage time increases, the wheels of the smart lawn mower will wear out, which will cause the overall height of the smart lawn mower to decrease. This will result in a height difference between the charging slot 1 and the charging tongue 7 before docking. However, the rotatable design of the charging tongue 7 enables the charging tongue 7 to adapt to the height difference between the charging slot 1 and the charging tongue 7 and the end of the charging tongue 7 to enter the charging slot 1. The final docking state between the charging tongue 7 and the charging slot 1 is shown in FIG. 4. In FIG. 4, because the overall height of the smart lawn mower has decreased, this results in the charging tongue 7 tilting downward to a greater extent than in FIG. 3.

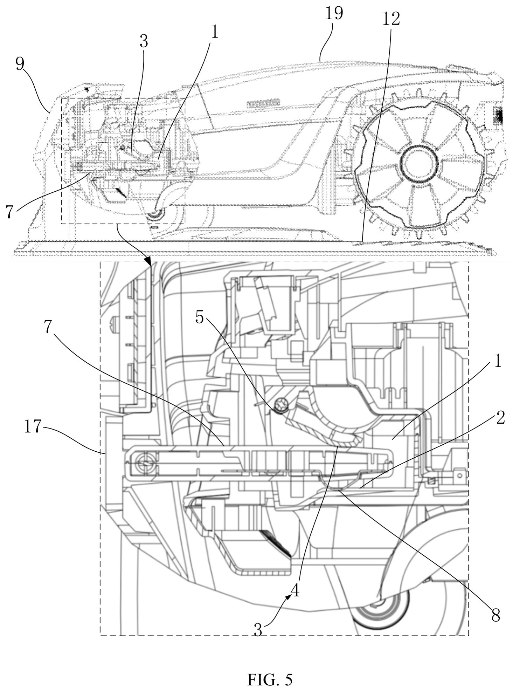

It can be understood that sometimes when the smart lawn mower returns to charge, the wheels may have dirt, grass clippings or other debris stuck to them. This can cause the overall height of the smart lawn mower to increase, resulting in a height difference between the charging slot 1 and the charging tongue 7 before docking. The rotatable design of the charging tongue 7 can also solve this problem. The final docking state between the charging tongue 7 and the charging slot 1 is shown in FIG. 5. In FIG. 5, because the overall height of the smart lawn mower has increased, this results in the charging tongue 7 tilting downward to a lesser extent than in FIG. 3.

It should be noted that the way in which the charging tongue 7 can be rotatably connected to the main body 9 in a self-resetting manner also facilitates the transportation of charging stations. During the transportation of charging stations, multiple charging stations are stacked on top of each other, and the charging tongue 7 is no longer in a horizontal state, but in an angled upward or downward state, thus saving transportation space.

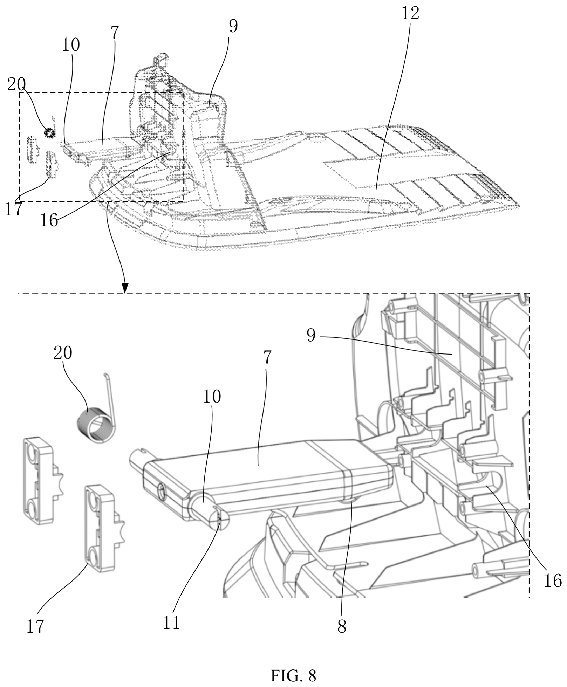

Referring to FIG. 8, a method is described to enable the charging tongue 7 to be rotatably connected to the main body 9 in a self-resetting manner. The charging tongue 7 is provided with a second pivot portion 10, the charging tongue 7 is rotatably connected to the main body 9 through the second pivot portion 10, the second pivot portion 10 is provided with a card slot 11, the second pivot portion 10 is sleeved with a second torsion spring 20, one leg of the second torsion spring 20 is engaged in the card slot 11 and the other leg of the second torsion spring 20 abuts against the main body 9.

Specifically, the main body 9 is provided a perforation (not shown in the figure) and a U-shaped card slot 16 is provided on the side of the main body 9 away from the smart lawn mower. The charging tongue 7 passes through the perforation, the second pivot portion 10 is placed in the U-shaped card slot 16, one leg of the second torsion spring 20 is engaged in the card slot 11, the other leg of the second torsion spring 20 abuts against the slot wall of the U-shaped card slot 16 and a snap cover 17 is mounted at the opening of the U-shaped card slot 16 to limit the second pivot portion 10 in the U-shaped card slot 16.

Referring to FIGS. 1-5, in one embodiment, in the docking state, the power terminal 8 and the charging terminal 2 are elastically connected. The elastic connection between the power terminal 8 and the charging terminal 2 reduces the requirement for positional accuracy between the power terminal 8 and the charging terminal 2, reduces the difficulty of docking between the power terminal 8 and the charging terminal 2 and ensures sufficient abutment force between the power terminal 8 and the charging terminal 2, thereby ensuring good contact between the power terminal 8 and the charging terminal 2. There are various ways to implement the elastic connection. For example, the power terminal 8 is a spring and the charging terminal 2 is a fixed metal plate; or, the power terminal 8 is a fixed metal plate and the charging terminal 2 is a spring; or both the power terminal 8 and the charging terminal 2 are springs.

In other embodiments, the power terminal 8 may also extend movably from the base. When the smart lawn mower is not docked with the charging station for charging, the power terminal 8 is hidden in the interior of the base; when the smart lawn mower returns to the charging station, the charging station can sense the arrival of the smart lawn mower, thereby causing the power terminal 8 to extend out from the interior of the base.

The smart lawn mower and docking charging system in this embodiment are designed with a smooth curved surface 4 on the side of the shield 3 that can abut against the external power terminal 8. This allows the shield 3 to have a larger contact area when it abuts against the external power terminal 8, ensuring good contact between the power terminal 8 and the charging terminal 2 and also preventing jamming between the shield 3 and the external power terminal 8. At the same time, the smooth curved surface 4 of the shield 3 can also guide the power terminal 8 into the charging slot 1, adapting to the height difference between the charging tongue 7 and the charging slot 1.

It should be noted that the above embodiments can be freely combined as desired. The above are only preferred embodiments of the present application. It should be noted that for those of ordinary skill in the art, certain improvements and modifications may be made without departing from the principles of the present application, and these improvements and modifications shall also be considered as within the scope of protection of the present application.

The present invention relates at least to a smart lawn mower, characterised in that it comprises:
a housing 19;
a number of wheels disposed at the bottom of the housing;
a cutting blade for performing cutting operations;
a cutting motor for driving the cutting blade;
a power supply module disposed within the housing for powering the cutting motor;
the housing is provided with a charging slot 1 recessed into the interior of the housing, the power supply module has a charging terminal 2 for transmitting energy, the charging terminal is provided in the charging slot, the smart lawn mower further comprises a shield 3 blocking the charging slot and the shield is rotatably connected to the charging slot;
when the charging terminal is in the initial state of not being connected to an external power terminal 8, the shield covers the opening of the charging slot;
when the charging terminal is in the docking state of being connected to an external power terminal, the shield and the charging terminal abut against two opposite sides of the external power terminal;
and the side of the shield that abuts against the external power terminal is a smooth curved surface 4.

Advantageously, the shield is rotatably connected to the charging slot via a first elastic member.

Advantageously, in the initial state, under the action of the first elastic member, the free end of the shield abuts against the opening of the charging slot from the inside.

Advantageously, in the docking state, under the action of the first elastic member, a side of the shield with a smooth curved surface abuts against the external power terminal.

Advantageously, the first elastic member is a first torsion spring 5, the shield is provided with a first pivot portion 6, the first torsion spring is sleeved on the first pivot portion, one leg of the first torsion spring abuts against the shield and the other leg of the first torsion spring abuts against the inner wall of the charging slot.

Advantageously, the charging slot extends longitudinally into the interior of the housing, the charging terminal is located on a lower wall surface in the charging slot and during the rotation of the shield from the initial state to the docking state, a free end of the shield gradually approaches an upper wall surface in the charging slot.

The present invention further relates at least to a docking charging system, comprising a charging station and the smart lawn mower as specified above, wherein the charging station comprises:
a base;
a power terminal disposed in the base;
when the charging station transfers energy to the smart lawn mower, the power terminal extends into the charging slot of the smart lawn mower and connects with the charging terminal.

Advantageously, the base comprises a main body 9 and a charging tongue 7 connected to the main body, the power terminal is disposed at the end of the charging tongue and when the charging station transmits energy to the smart lawn mower, the charging tongue extends into the charging slot of the smart lawn mower.

Advantageously, the charging tongue is rotatably connected to the main body in a self-resetting manner.

Advantageously, the charging tongue is provided with a second pivot portion 10, the charging tongue is rotatably connected to the main body through the second pivot portion, the second pivot portion is provided with a card slot 11, the second pivot portion is sleeved with a second torsion spring 20, one leg of the second torsion spring is engaged in the card slot and the other leg of the second torsion spring abuts against the main body.

Advantageously, in the docking state, the power terminal and the charging terminal are elastically connected.

Advantageously, the charging station further comprises a base plate 12, the base is located on the base plate and when the charging station transmits energy to the smart lawn mower, the smart lawn mower is located entirely on the base plate.

## Claims

1. A smart lawn mower, **characterised in that** it comprises:
a housing (19);
a number of wheels disposed at the bottom of the housing;
a cutting blade for performing cutting operations;
a cutting motor for driving the cutting blade;
a power supply module disposed within the housing for powering the cutting motor;
the housing is provided with a charging slot (1) recessed into the interior of the housing, the power supply module has a charging terminal (2) for transmitting energy, the charging terminal is provided in the charging slot, the smart lawn mower further comprises a shield (3) blocking the charging slot and the shield is rotatably connected to the charging slot;
when the charging terminal is in the initial state of not being connected to an external power terminal (8), the shield covers the opening of the charging slot;
when the charging terminal is in the docking state of being connected to an external power terminal, the shield and the charging terminal abut against two opposite sides of the external power terminal;
and the side of the shield that abuts against the external power terminal is a smooth curved surface (4).

2. A smart lawn mower according to claim 1, **characterised in that** the shield is rotatably connected to the charging slot via a first elastic member;
in the initial state, under the action of the first elastic member, the free end of the shield abuts against the opening of the charging slot from the inside;
in the docking state, under the action of the first elastic member, a side of the shield with a smooth curved surface abuts against the external power terminal.

3. A smart lawn mower according to claim 2, **characterised in that** the first elastic member is a first torsion spring (5), the shield is provided with a first pivot portion (6), the first torsion spring is sleeved on the first pivot portion, one leg of the first torsion spring abuts against the shield and the other leg of the first torsion spring abuts against the inner wall of the charging slot.

4. A smart lawn mower according to any one of claims 1-3, **characterised in that** the charging slot extends longitudinally into the interior of the housing, the charging terminal is located on a lower wall surface in the charging slot and during the rotation of the shield from the initial state to the docking state, a free end of the shield gradually approaches an upper wall surface in the charging slot.

5. A docking charging system, **characterised in that** it comprises a charging station and the smart lawn mower according to any one of claims 1-4, wherein the charging station comprises:
a base;
a power terminal disposed in the base;
when the charging station transfers energy to the smart lawn mower, the power terminal extends into the charging slot of the smart lawn mower and connects with the charging terminal.

6. A docking charging system according to claim 5, **characterised in that** the base comprises a main body (9) and a charging tongue (7) connected to the main body, the power terminal is disposed at the end of the charging tongue and when the charging station transmits energy to the smart lawn mower, the charging tongue extends into the charging slot of the smart lawn mower.

7. A docking charging system according to claim 6, **characterised in that** the charging tongue is rotatably connected to the main body in a self-resetting manner.

8. A docking charging system according to claim 7, **characterised in that** the charging tongue is provided with a second pivot portion (10), the charging tongue is rotatably connected to the main body through the second pivot portion, the second pivot portion is provided with a card slot (11), the second pivot portion is sleeved with a second torsion spring (20), one leg of the second torsion spring is engaged in the card slot and the other leg of the second torsion spring abuts against the main body.

9. A docking charging system according to any one of claims 5-8, **characterised in that**, in the docking state, the power terminal and the charging terminal are elastically connected.

10. A docking charging system according to any one of claims 5-8, **characterised in that** the charging station further comprises a base plate (12), the base is located on the base plate and when the charging station transmits energy to the smart lawn mower, the smart lawn mower is located entirely on the base plate.
